# EUROPEAN PATENT APPLICATION

(11) **EP 1 437 372 A1**
(43) Date of publication of application: **14.07.2004**
(21) Application number: 04000009.3
(22) Date of filing: 02.01.2004
(51) Int. Cl.: C08G 18/76, C08G 18/18, C08K 5/13

(54) **Polyurethane foam**

(30) Priority: 08.01.2003 JP 2003002625
(71) Applicant: INOAC CORPORATION, Nagoya-shi Aichi-ken (JP); DENSO CORPORATION, Kariya-shi, Aichi-ken (JP)
(72) Inventor: Takano, Motohiro, Anjo-shi Aichi (JP); Nishimura, Yoshinobu, Anjo-shi Aichi (JP); Yano, Tadashi, Anjo-shi Aichi (JP); Uchiyama, Kazuhisa, Kariya-shi Aichi (JP); Ito, Masahiro, Kariya-shi Aichi (JP)
(74) Representative: HOFFMANN - EITLE

(57) **Abstract**

A polyurethane foam is produced by mixing a polyol, an isocyanate, a catalyst, and an antioxidant, wherein the antioxidant and an antioxidant used in synthesizing the polyol each are a high-molecular compound having a number-average molecular weight not lower than a certain level, and the amount of volatile organic compounds emitted from the polyurethane foam is thus reduced.

## Description

### FIELD OF THE INVENTION

The present invention relates to a polyurethane foam. More particularly, the invention relates to a polyurethane foam reduced in the amount of volatile organic compounds emitted therefrom during use by producing the polyurethane foam from material components which are high-molecular substances each having a number-average molecular weight not lower than a certain level.

### BACKGROUND OF THE INVENTION

In general, polyurethane foams can be made to have compositions having various properties, e.g., excellent lightweight properties, cushioning properties, chemical resistance, and water resistance, by changing the kinds and proportions of the polyol and isocyanate to be used as material components therefor. Due to such excellent properties and high general-purpose properties, polyurethane foams have been advantageously used as materials for interior automotive materials, various daily miscellaneous goods, and furniture components such as cushions and mats.

It is known that volatile organic compounds causative of an offensive odor or another trouble usually volatilize from polyurethane foams with the lapse of time. These volatile organic compounds pose the following problems. In the case where the polyurethane foams are used as interior automotive materials, the volatile organic compounds adhere to, e.g., the glass surfaces in the seat compartment to impair visibility. In the case where the polyurethane foams are used as various furniture components, a problem has been pointed out, besides adhesion to glass surfaces, that the volatile organic compounds may influence the human body like formaldehyde, which is a cause of the so-called sick houses. Furthermore, the visibility impairment in vehicles can be one of the causes of serious problems such as traffic accidents. The adverse influences on the human body in the case of use as furniture components also are regarded as a problem which is serious in such a degree that legal regulation is separately necessary. To take measures against these is of urgent necessity.

### SUMMARY OF THE INVENTION

The invention has been achieved in view of the above-described drawbacks of polyurethane foams according to related-art techniques and in order to favorably eliminate these drawbacks. An object of the invention is to provide a polyurethane foam which can be reduced in the amount of volatile organic compounds (VOCs) emitted during the use of the polyurethane foam or various products produced therefrom, by selecting and using high-molecular compounds each having a number-average molecular weight not lower than a certain level.

In order to overcome the problems described above and to accomplish the desired object, the invention provides in one aspect thereof a polyurethane foam produced from material components comprising at least one polyol, at least one isocyanate, a catalyst, and an antioxidant,
the antioxidant and an antioxidant used in synthesizing the polyol each being a high-molecular compound having a number-average molecular weight not lower than a certain level,
wherein the amount of volatile organic compounds emitted from the polyurethane foam having been thus reduced.

In another aspect, the invention provides, in order to overcome those problems and accomplish the object, a polyurethane foam produced from material components comprising at least one polyol, at least one isocyanate, a catalyst, and an antioxidant,
the antioxidant and an antioxidant used in synthesizing the polyol each being a high-molecular compound having a number-average molecular weight not lower than a certain level,
the catalyst comprising a substance which chemically bonds to the structure of the polyurethane foam in the course of polymerization reaction for polyurethane foam production,
wherein the amount of volatile organic compounds emitted from the polyurethane foam having been thus reduced.

### DETAILED DESCRIPTION OF THE INVENTION

The polyurethane foam according to the invention will be explained below by reference to preferred embodiments thereof. The present inventors have found that the amount of volatile organic compounds (hereinafter referred to as VOCs) can be reduced by selectively using high-molecular compounds having a number-average molecular weight not lower than a certain level as additives in ordinary use including an antioxidant, in order to obtain the polyurethane foam having satisfactory properties. In the invention, values of VOC content are determined and evaluated by the VOC measurement method as provided for in German Automobile Industry Association VDA278.

In the invention, the VOC content is regulated to generally 500 ppm or lower, preferably 400 ppm or lower, more preferably 50 ppm or lower, in terms of the VOC content value determined by the VOC measurement method as provided for in German Automobile Industry Association VDA278. This value of VOC content is attained basically by the selection of an antioxidant and a catalyst, which are major causes of a VOC content increase, i.e., by using an antioxidant and a catalyst which satisfy the requirements described later, as the inventor has found.

The polyurethane foam according to a preferred embodiment of the invention is produced by selectively using as an antioxidant a high-molecular compound having a number-average molecular weight not lower than a certain level in combination with a polyol and isocyanate as the main material components. A polyurethane foam having a further reduced value of VOC content can be produced by using as a catalyst a substance which chemically bonds to the structure of the polyurethane foam in the course of polymerization reaction for yielding the polyurethane foam, e.g., a reactive amine catalyst, and by optionally taking other measure(s). One or more additives selected from chain extenders, flame retardants, crosslinking agents, blowing agents, foam stabilizers, and the like are used according to need.

Especially in the case where the polyol is a polyether polyol, an antioxidant is used also in synthesizing the polyether polyol in order to obtain satisfactory polyurethane foams. This antioxidant used in synthesis is one of the major causes which heighten the value of VOC content. Consequently, with respect to this antioxidant to be used in the synthesis also, a high-molecular compound having a number-average molecular weight not lower than a certain level is selected and used as in the case of the antioxidant to be used in producing the polyurethane foam.

In the case where the polyol is a polyester polyol, an antioxidant which heightens the value of VOC content need not be used in synthesizing the polyester polyol because this polyol contains in the molecule no ether groups which are susceptible to oxidation. However, in producing a polyurethane foam from the polyester polyol and an isocyanate, an antioxidant is used as a scorch retardant for the purpose of preventing the phenomenon in which partial yellowing occurs due to the heat of an exothermic reaction, i.e., the so-called scorching. It is hence necessary to selectively use as the antioxidant (scorch retardant) a high-molecular compound having a number-average molecular weight not lower than a certain level for enabling the polyurethane foam as a whole to have a reduced value of VOC content.

Furthermore, when the polyester polyol is to be used, a high-molecular compound having a number-average molecular weight not lower than a certain level is selected, like the antioxidant, as a polymerization initiator to be used in synthesizing the polyester polyol. Specifically, it is preferred to employ a compound having a number-average molecular weight of from 400 to 1,000, such as, e.g., a dimer acid. In general, an inexpensive substance such as adipic acid is used for the synthesis of ordinary polyester polyols from the standpoints of synthesis cost, etc. In this case, however, the polyol synthesis results in a residue which remains uncondensed to the target number-average molecular weight and this residue is decomposed to cyclic esters, which are causative of VOC emission. Consequently, it is undesirable to use such polymerization initiators.

As the antioxidant is preferably used a high-molecular substance having a number-average molecular weight of from 400 to 5,000. In case where an antioxidant having a number-average molecular weight lower than 400 is used, the polyurethane foam obtained with this antioxidant may have a considerably increased value of VOC content, making it impossible to attain the VOC content value of 500 ppm or lower. Furthermore, the selection of an antioxidant considerably influences the value of VOC content as stated above. In the case of the polyether polyol, it should be noted that since an antioxidant is used not only in synthesizing the polyol but also for the purpose of preventing the oxidative deterioration of the polyurethane foam itself, the influence of the antioxidant is great.

With respect to the kind of the antioxidant, preferred antioxidants are ones widely usable in polyether polyol synthesis and polyurethane foam production. Examples thereof include hindered phenol compounds such as calcium diethylbis-3,5-bis(1,1-dimethylethyl)-4-hydroxyphenyl[methyl]phosphonate (number-average molecular weight: 695), 4,6-bis(octylthiomethyl)-o-cresol (number-average molecular weight: 424.7), ethylenebis(hydroxyethylene)-bis[3-(5-tert-butyl-4-hydroxy-m-tolyl) propionate] (number-average molecular weight: 586.8), pentaerythritol tetrakis[3-(3,5-di-tert-butyl-4-hydroxyphenyl)propionate] (number-average molecular weight: 1,178), thiodiethylene-bis[3-(3,5-di-tert-butyl-4-hydroxyphenyl) propionate] (number-average molecular weight: 643), octadecyl 3-(3,5-di-tert-butyl-4-hydroxyphenyl)propionate (number-average molecular weight: 531), and N,N'-hexane-1,6-diylbis[3-(3,5-di-tert-butyl-4-hydroxyphenylpropionamide)] (number-average molecular weight: 637). Besides such hindered phenol compounds, examples of the antioxidants include phosphorus compound antioxidants, sulfur compound antioxidants, and hindered amine antioxidants.

The polyol to be used as one of the main material components preferably is a compound which has two or more hydroxyl groups and is generally called a polyol. Examples thereof include polyether polyols, polyester polyols, polycarbonate polyols, polycaprolactone polyols, and mixtures of two or more thereof. Such polyols may be used in combination with a compound having active hydrogen in place of hydroxyl groups, such as, e.g., a carboxylic acid or amine.

As the isocyanate can be used various isocyanate compounds in general use which are aromatic, aliphatic, and alicyclic compounds having two or more isocyanate groups. Furthermore, modified isocyanates obtained by modifying isocyanate compounds can be used. A combination of two or more of such isocyanates may also be used. Specific examples thereof include aromatic isocyanates such as diphenylmethane diisocyanate (MDI), crude diphenylmethane diisocyanate, tolylene diisocyanate, naphthalene diisocyanate (NDI), p-phenylene diisocyanate (PPDI), xylene diisocyanate (XDI), and tolidine diisocyanate (TODI); alicyclic isocyanates such as isophorone diisocyanate (IPDI), cyclohexyl diisocyanate (CHDI), hydrogenated XDI (H₆XDI), and hydrogenated MDI (H₁₂MDI); and aliphatic isocyanates such as tetramethylene diisocyanate (TMDI), hexamethylene diisocyanate (HDI), lysine diisocyanate (LDI), and lysine triisocyanate (LTI). Examples of modifications thereof include urethane-modified isocyanates, dimers and trimers of isocyanates, carbodiimide-modified isocyanates, allophanate-modified isocyanates, biuret-modified isocyanates, urea-modified isocyanates, and isocyanate prepolymers. From the standpoint of production cost, it is preferred to use diphenylmethane diisocyanate (MDI).

As the catalyst is preferably used a so-called amine catalyst. Examples of the amine catalyst include unreactive monoamines such as dimethylcyclohexylamine, N-methyldicyclohexylamine, triethylamine, tripropylamine, tributylamine, N-methylmorpholine, N-ethylmorpholine, and N-dimethylbenzylamine, unreactive diamines such as triethylenediamine, tetramethylhexamethylenediamine, bisdimethylaminoethyl ether, tetramethylpropanediamine, dimethylaminoethylmorpholine, tetramethylethylenediamine, diazobicycloundecene, and 2-methyl-1,4-diazabicyclo-[2.2.2]octane, unreactive triamines such as pentamethyldiethylenetriamine and pentamethyldipropylenetriamine, reactive amines such as dimethylethanolamine, N-trihydroxyethylene-N,N-dimethylamine, and N,N-dimethyl-N-hexanolamine, and organic acid salts of these amines. It has been found that the organic acid/metallic tin catalysts, e.g., stannous octoate, dibutyltin diacetate, or dibutyltin dilaurate, which are generally used in combination with the amine catalyst considerably heighten the value of VOC content. It is therefore desired that the amount of the organic acid/metallic tin catalyst to be used be regulated to less than 0.1 part by weight per 100 parts by weight of the polyol. From the standpoint of obtaining blowing stability in polyurethane foam production, it is preferred to use at least 0.5 parts by weight of the amine catalyst per 100 parts by weight of the polyether polyol in place of the organic acid/metallic tin catalyst to be used in an amount of 0.1 part by weight or larger per 100 parts by weight of the polyol.

Besides the aforementioned amine compounds including dimethylethanolamine, N-trihydroxyethylene-N,N-dimethylamine, and N,N-dimethyl-N-hexanolamine, preferred examples of the amine catalyst include reactive amine compounds having one or more active hydrogen groups (hereinafter referred to as reactive amine catalysts) such as N,N-dimethylaminoethanol, amine ethoxide hydroxides, N,N-tetramethyl-1,3-diamino-2-propanol, N,N,N'-trimethylaminoethylethanolamine, N,N,N-trimethylaminopropylethanolamine, N-methyl-N'-(2-hydroxyl)morpholine, 1-(2-hydroxypropyl)imidazole, 2,4,6-tris(dimethylaminomethyl)phenol, 1,4-bis(2-hydroxypropyl)-2-methylpiperazine, and triethanolamine. The reasons for the preference of such reactive amine catalysts are as follows. In case where a catalyst does not participate in the polyurethane-forming reaction and remains thereafter, it is causative of an increase in VOC content like the organic acid/metallic tin catalyst. After functioning as catalysts, those reactive amine compounds chemically bond, for example, to the molecular structure of the polyurethane foam obtained as a reaction product and thus come into a state from which no VOCs emits. By the use of such a reactive amine catalyst, the VOC content of even a polyurethane foam obtained with the organic acid/metallic tin catalyst can be effectively reduced.

Examples of other additives include ones in general use such as a chain extender, flame retardant, crosslinking agent, blowing agent, and foam stabilizer. Examples of the chain extender include polyamines such as diethyltoluenediamine and dimethylthiotoluenediamine. Examples of the flame retardant include trisdichloropropyl phosphate, trischloroethyl phosphate, dibromoneopentyl alcohol, and tribromoneopentyl alcohol. Examples of the crosslinking agent include known ones such as polyhydric alcohols such as ethylene glycol, propylene glycol, butanediol, glycerol, trimethylolpropane, pentaerythritol, and sorbitol, amines such as hexamethylenediamine, hydrazine, diethyltoluenediamine, and diethylenetriamine, and amino alcohols such as monoethanolamine, diethanolamine, and triethanolamine. Examples of the blowing agent include water, hydrocarbons such as cyclopentane, isopentane, and n-penane, hydrofluorocarbons such as nonafluorobutyl methyl ether, nonafluoroisobutyl methyl ether, nonafluorobutyl ethyl ether, nonafluoroisobutyl ethyl ether, pentafluoroethyl methyl ether, and heptafluoroisopropyl methyl ether, and liquefied carbonic acid gas. As the foam stabilizer can be used a substance in ordinary use in producing ordinary foams. Examples thereof include various foam stabilizers such as dimethylsiloxane compounds, polyether dimethylsiloxane compounds, and phenylmethylsiloxane compounds. Other additives including a colorant and a filler may be incorporated according to need. Like the antioxidant described above, all these additives preferably are relatively high-molecular substances. This is because in case where such additives have a low number-average molecular weight, they are apt to volatilize as volatile ingredients after foam molding.

For producing the polyurethane foam, use can be made of a process which is basically the same as in the production of ordinary polyurethane foams, as stated above. Namely, the foam is produced by mixing the main material components comprising a polyol and an isocyanate with sub material components including the given catalyst and antioxidant. Specifically, the foam can be obtained by a continuous foaming process for producing polyurethane foam slabs from a two-component system. In this process, in which continuous production is possible, a liquid reaction mixture comprising the main material components and sub material components is ejected onto a running conveyor of a desired constitution and this reaction mixture is caused to freely foam and cure at atmospheric pressure on the conveyor which is running. The resultant foam is cut into a given length to obtain a slab stock. This slab stock is separately cured in a heating oven to obtain a product. For obtaining the liquid reaction mixture, the material components are introduced into an injection machine chamber as a mixing mechanism and mixed together by stirring. For this introduction/mixing, a known method may be suitably employed, such as, e.g., the so-called one-shot method in which a polyol ingredient is mixed beforehand with sub material components including the given antioxidant and the polyol ingredient mixture is ejected into the injection chamber simultaneously with separate ejection of an isocyanate thereinto to thereby mix the polyol ingredient mixture with the isocyanate by stirring. Also usable is a method in which the each material component is introduced into the injection machine chamber through injection nozzles respectively and mixed together by stirring therein.

The following are Experiment Examples in which polyurethane foams according to the invention, which attain a low value of VOC content, were produced while changing conditions including the kinds of an antioxidant and catalyst and the polyurethane foams obtained were examined for VOC content (ppm). It should be noted that the polyurethane foam of the invention is not construed as being limited to the following Experiment Examples.

### (Method of Determining VOC Content)

In the following Experiment Examples, each of test pieces weighing about 7 mg cut out of polyurethane foams obtained from respective combinations of material components was placed in a glass tube and examined by the VOC measurement method as provided for in "German Automobile Industry Association VDA278" using a thermal desorption apparatus (trade name, TDSA (including KAS, KAS-3+, and KAS-4); manufactured by Gestel). Specifically, each test piece was heated under the conditions of a temperature of 90°C and a period of 30 minutes and the gas emitted during this heating was analyzed with a gas chromatograph mass spectrometer (trade name, Gas Chromatograph Mass Spectrometer (No. 6890-5973N); manufactured by Agilent. The value of VOC content was calculated from the results. According to the provisions of the "German Automobile Industry Association VDA278", each test piece which had undergone the VOC content determination was subsequently heated under the conditions of a temperature of 120°C and a period of 1 hour and the gas emitted during this heating was likewise analyzed with the gas chromatograph mass spectrometer. Thus, the value of FOG content was also calculated.

### (EXPERIMENT 1) With Respect to Relationship between Kind of Antioxidant and VOC Content

A polyether polyol synthesized with an antioxidant was selected as a main material component for polyurethane foams. The number-average molecular weights of the antioxidants to be used were changed to produce polyurethane foams according to Examples 1 and 2 and a polyurethane foam according to Comparative Example 1. The formulations for these polyurethane foams are shown in Table 1 which will be given later. The polyurethane foams were examined for VOC content, etc. The material components used are described below. The antioxidant to be used in polyol synthesis is referred to as synthesis antioxidant.

The material components used are as follows.
- Polyol A: Polyether polyol (trade name, GP3000; manufactured by Sanyo Chemical); synthesis antioxidant (BHT (2,6-di-tert-butyl-4-methylphenol) (trade name, BHT Swanox; manufactured by Seiko Chemical (number-average molecular weight: 220))/addition amount, 0.003 part by weight
- Polyol B: Polyether polyol (trade name, GP3000; manufactured by Sanyo Chemical); synthesis antioxidant (trade name, IRGANOX 245; manufactured by Ciba Specialty Chemicals (number-average molecular weight: 586.8))/addition amount, 0.003 part by weight
- Polyol C: Polyether polyol (trade name, GP3000; manufactured by Sanyo Chemical); synthesis antioxidant (trade name, IRGANOX 1010; manufactured by Ciba Specialty Chemicals (number-average molecular weight: 1,178))/addition amount, 0.003 part by weight
- Isocyanate: Tolylene diisocyanate (trade name, TDI-80; manufactured by Sumitomo Bayer Urethane)
- Antioxidant A: BHT (2,6-di-tert-butyl-4-methylphenol) (trade name, BHT Swanox; manufactured by Seiko Chemical (number-average molecular weight: 220))
- Antioxidant B: Trade name, IRGANOX 245; manufactured by Ciba Specialty Chemicals (number-average molecular weight: 586.8)
- Amine catalyst: Triethylenediamine (trade name, LV-33; manufactured by Chukyo Yushi)
- Organic acid/metallic tin catalyst: Stannous octoate (trade name, MRH-110; manufactured by Johoku Chemical)
- Foam stabilizer: Silicone foam stabilizer (trade name, TEGOSTAB B8110; manufactured by Goldschmidt)
- Blowing agent: Water

**Table 1**

| Ingredient (pbw) | Example 1 | Example 2 | Comparative Example 1 |
|---|---|---|---|
| Polyol A | | | 100 |
| Polyol B | 100 | | |
| Polyol C | | 100 | |
| Isocyanate | 51.6 | 51.6 | 51.6 |
| Antioxidant A | | | 0.01 |
| Antioxidant B | 0.01 | 0.01 | |
| Amine catalyst | 0.3 | 0.3 | 0.3 |
| Organic acid/metallic tin catalyst | 0.2 | 0.2 | 0.2 |
| Foam stabilizer | 1.0 | 1.0 | 1.0 |
| Blowing agent | 3.9 | 3.9 | 3.9 |
| VOC content (ppm) | 401 | 422 | 6020 |
| FOG content (ppm) | 43 | 59 | 190 |

### (Results of Experiment 1)

The results of Experiment 1 are shown in Table 1. The following was ascertained from the results in Table 1. When a polyol was synthesized with an antioxidant having a number-average molecular weight of 400 or higher and this polyol was used to produce a polyurethane foam, then the value of VOC content which was close to 6,020 ppm decreased to about 400 ppm, i.e., decreased to about 1/15. For reference, the following Table 2 summarizes the degrees in which the material components shown in Table 1 influence VOC content, etc. In Table 2, the values of VOC content/FOG content attributable to the isocyanate, foam stabilizer, and blowing agent and to unspecifiable substances are collectively shown. It should be noted that fluctuations in VOC content/FOG content up to about 10 ppm are within the range of errors.

**Table 2**

| Ingredient (VOC content/ FOG content) | Example 1 | Example 2 | Comparative Example 1 |
|---|---|---|---|
| Polyol A | | | 1424/17 |
| Polyol B | 0/0 | | |
| Polyol C | | 0/0 | |
| Antioxidant A | | | 4200/40 |
| Antioxidant B | 0/0 | 0/0 | |
| Amine catalyst | 61/12 | 72/18 | 63/13 |
| Organic acid/metallic tin catalyst | 307/24 | 326/38 | 314/30 |
| Isocyanate | 33/7 | 24/3 | 19/90 |
| Foam stabilizer | | | |
| Blowing agent | | | |
| Total | 401/43 | 422/59 | 6020/190 |

In the table, VOC content and FOG content are shown in terms of ppm.

Table 2 shows that the general-purpose antioxidant accounts for about 80% of the total. It was ascertained that the value of VOC content had been considerably reduced by selecting a high-molecular substance as the antioxidant. (EXPERIMENT 2) With Respect to Relationship between Kind of Catalyst and VOC Content

The formulation in Example 1 in Experiment 1, in which a polyether polyol synthesized with an antioxidant having a number-average molecular weight of 400 or higher was selected as a main material component for the polyurethane foam, was modified as a reference by changing the kind of the catalyst to be used. Thus, polyurethane foams respectively according to Examples 3 to 5 were produced. The formulations for these polyurethane foams are shown in Table 3. The polyurethane foams were examined for VOC content, etc. The results for Example 1 obtained in Experiment 1 are also shown in the table. The material components used are described below.

The material components used are as follows.
- Reactive amine catalyst: Dimethylaminohexanol (trade name, Kaolizer No. 25; manufactured by Kao)
- The polyol B, isocyanate, antioxidant B, amine catalyst, organic acid/metallic tin catalyst, foam stabilizer, and blowing agent are the same as in Experiment 1.

**Table 3**

| Ingredient (pbw) Ingredient (pbw) | Example 3 | Example 4 | Example 5 | Example 1 |
|---|---|---|---|---|
| Polyol B | 100 | 100 | 100 | 100 |
| Isocyanate | 51.6 | 51.6 | 51.6 | 51.6 |
| Antioxidant B | 0.01 | 0.01 | 0.01 | 0.01 |
| Amine catalyst | 0.8 | - | - | 0.3 |
| Reactive Amine catalyst | - | 1.5 | 0.6 | - |
| Organic acid/metallic tin catalyst | - | - | 0.2 | 0.2 |
| Foam stabilizer | 1.0 | 1.0 | 1.0 | 1.0 |
| Blowing agent | 3.9 | 3.9 | 3.9 | 3.9 |
| VOC content (ppm) | 232 | 14 | 315 | 401 |
| FOG content (ppm) | 19 | 20 | 35 | 43 |

### (Results of Experiment 2)

The results of Experiment 2 are shown in Table 3. The following were ascertained from the results in Table 3. Compared to the case where an ordinary organic acid/metallic tin catalyst and an ordinary amine catalyst were used, use of a reactive amine catalyst in place of the amine catalyst resulted in a distinct decrease (see Example 5). The value of VOC content in the case where an organic acid/metallic tin catalyst was not used was about a half of the value thereof in the case where the tin catalyst was used (see Example 3). Furthermore, use of a reactive amine catalyst as the only catalyst was effective in further reducing the value of VOC content (see Example 4). For reference, the following Table 4 summarizes the degrees in which the material components shown in Table 3 influence VOC content, etc. In Table 4, the values of VOC content/FOG content attributable to the isocyanate, foam stabilizer, and blowing agent and to unspecifiable substances are collectively shown. It should be noted that fluctuations in VOC content/FOG content up to about 10 ppm are within the range of errors.

**Table 4**

| Ingredient (VOC content/FOG content) | Example 3 | Example 4 | Example 5 | Example 1 |
|---|---|---|---|---|
| Polyol B | 0/0 | 0/0 | 0/0 | 0/0 |
| Antioxidant B | 0/0 | 0/0 | 0/0 | 0/0 |
| Amine catalyst | 209/15 | | | 61/12 |
| Reactive Amine catalyst | | 0/2 | 0/1 | |
| Organic acid/metallic tin catalyst | | | 300/20 | 307/24 |
| Isocyanate | 23/4 | 14/18 | 15/14 | 33/7 |
| Foam stabilizer | | | | |
| Blowing agent | | | | |
| Total | 232/19 | 14/20 | 315/35 | 401/43 |

In the table, VOC content and FOG content are shown in terms of ppm.

The following were ascertained from Table 4. Use of 0.1 part by weight of the organic acid/metallic tin catalyst increases the VOC content by about 150 ppm, and 0.1 part by weight of the amine catalyst increases the VOC content by about from 20 to 25 ppm. In contrast, use of 0.1 part by weight of the reactive amine catalyst results in almost no change in VOC content.

### (EXPERIMENT 3) With Respect to Relationship between Kind of Polyol and VOC Content

An experiment in which polyester polyols were used in place of the polyether polyols used as a main material component for polyurethane foams was conducted to produce polyurethane foams respectively according to Example 6 and Comparative Example 2. The formulations for these polyurethane foams are shown in Table 5. The polyurethane foams obtained were examined for VOC content, etc. The material components used are described below.

The material components used are as follows.
- Polyol D: Polyester polyol (trade name, N-2200; manufactured by Nippon Polyurethane (substance synthesized by condensing DEG (diethylene glycol) with TMP (trimethylolpropane) using adipic acid (number-average molecular weight: 146.15) as a polymerization initiator)
- Polyol E: Polyester polyol (substance synthesized by condensing methylpentanediol with TMP using a dimer acid (number-average molecular weight: 400 or higher) as a polymerization initiator)
- The isocyanate, catalyst (amine catalyst only), foam stabilizer, and blowing agent are the same as in Experiment 1. The scorch retardants in this Experiment 3 are basically the same substances as the antioxidants used in combination with polyether polyols. Because these substances were added to a material component mixture, they functioned not as an antioxidant but as a scorch retardant as stated hereinabove. There is substantially no difference between these.

**Table 5**

| Ingredient (pbw) | Example 6 | Comparative Example 2 |
|---|---|---|
| Polyol D | | 100 |
| Polyol E | 100 | |
| Isocyanate | 39.5 | 39.5 |
| Scorch retardant A | | 0.008 |
| Scorch retardant B | 0.008 | |
| Amine catalyst | 0.2 | 0.2 |
| Foam stabilizer | 1.5 | 1.5 |
| Blowing agent | 2.7 | 2.7 |
| VOC content (ppm) | 81 | 4158 |
| FOG content (ppm) | 43 | 348 |

### (Results of Experiment 3)

The results of Experiment 3 are shown in Table 5. It was ascertained from the results in Table 5 that the value of VOC content could be considerably reduced by selecting high-molecular substances respectively as a polymerization initiator for polyester polyol production and a scorch retardant (antioxidant). For reference, the following Table 6 summarizes the degrees in which the material components shown in Table 5 influence VOC content, etc. In Table 6, the values of VOC content/FOG content attributable to the isocyanate, foam stabilizer, and blowing agent and to unspecifiable substances are collectively shown. It should be noted that fluctuations in VOC content/FOG content up to about 10 ppm are within the range of errors.

**Table 6**

| Ingredient (VOC content/FOG content) | Example 6 | Comparative Example 2 |
|---|---|---|
| Polyol D | | 712/260 |
| Polyol E | 0/0 | |
| Scorch retardant A | | 3360/32 |
| Scorch retardant B | 0/0 | |
| Amine catalyst | 52/2 | 38/6 |
| Isocyanate | 29/40 | 48/50 |
| Foam stabilizer | | |
| Blowing agent | | |
| Total | 81/43 | 4158/348 |

In the table, VOC content and FOG content are shown in terms of ppm.

It was ascertained from Table 6 that the low-molecular scorch retardant, i.e., antioxidant, and the low-molecular polymerization initiator used in polyester polyol production considerably heighten the value of VOC content as in the case of polyether polyols.

As described above, the polyurethane foam according to the invention can be reduced in the amount of volatile organic compounds (VOCs) emitted during the use of the polyurethane foam and various products produced therefrom, by selecting high-molecular compounds each having a number-average molecular weight not lower than a certain level as an antioxidant, etc. and by optionally taking other measure(s).

While the invention has been described in detail and with reference to specific embodiments thereof, it will be apparent to one skilled in the art that various changes and modifications can be made therein without departing from the spirit and scope thereof.

## Claims

1. A polyurethane foam produced from material components comprising at least one polyol, at least one isocyanate, a catalyst, and an antioxidant,
the antioxidant and an antioxidant used in synthesizing the polyol each being a high-molecular compound having a number-average molecular weight not lower than a certain level,
wherein the amount of volatile organic compounds emitted from the polyurethane foam having been thus reduced.

2. The polyurethane foam of claim 1, which when examined by the VOC measurement method as provided for in German Automobile Industry Association VDA278, has a value of total VOC content, which is an index to the degree of reduction of the emission of volatile organic compounds, of 500 ppm or lower.

3. The polyurethane foam of claim 1 or 2, wherein the antioxidant and the antioxidant used in synthesizing the polyol each have a number-average molecular weight of from 400 to 5,000.

4. The polyurethane foam of any of claims 1 to 3, wherein the antioxidant and the antioxidant used in synthesizing the polyol each are a hindered phenol substance.

5. The polyurethane foam of any of claims 1 to 4, wherein the polyol comprises a polyester polyol.

6. The polyurethane foam of claim 5, wherein the polyester polyol is one produced with a polymerization initiator having a number-average molecular weight of from 400 to 1,000.

7. The polyurethane foam of claim 6, wherein the polymerization initiator is a dimer acid.

8. A polyurethane foam of any of claims 1 to 7, wherein the catalyst comprises a substance which chemically bonds to the structure of the polyurethane foam in the course of polymerization reaction for polyurethane foam production.

9. The polyurethane foam of claim 8, wherein the substance which chemically bonds to the structure of the polyurethane foam is an amine compound containing an active-hydrogen group.

10. The polyurethane foam of claim 8 or 9, which when examined by the VOC measurement method as provided for in German Automobile Industry Association VDA278, has a value of total VOC content, which is an index to the degree of reduction of the emission of volatile organic compounds, of 400 ppm or lower.

11. The polyurethane foam of claim 8, wherein the catalyst consists of an amine catalyst alone.

12. The polyurethane foam of claim 11, which when examined by the VOC measurement method as provided for in German Automobile Industry Association VDA278, has a value of total VOC content, which is an index to the degree of reduction of the emission of volatile organic compounds, of 50 ppm or lower.
